(19) Europäisches Patentamt
European Patent Office
Office européen des brevets

(11) **EP 2 351 975 B1**

(12) **EUROPÄISCHE PATENTSCHRIFT**

(45) Veröffentlichungstag und Bekanntmachung des Hinweises auf die Patenterteilung:
**14.12.2016 Patentblatt 2016/50**

(51) Int Cl.:
***F24J 2/24*** *(2006.01)*   ***F24J 2/20*** *(2006.01)*
***F24J 2/46*** *(2006.01)*

(21) Anmeldenummer: **08877813.9**

(22) Anmeldetag: **27.10.2008**

(86) Internationale Anmeldenummer:
**PCT/RU2008/000666**

(87) Internationale Veröffentlichungsnummer:
**WO 2010/050836 (06.05.2010 Gazette 2010/18)**

(54) **ZUM BETRIEB UNTER BEDINGUNGEN IN NÖRDLICHEN REGIONEN VERWENDETER, AUF EINER WÄRMEAUFNAHMEPLATTE AUS KORROSIONSBESTÄNDIGEN MATERIALIEN BESTEHENDER FLACHER SONNENKOLLEKTOR**

FLAT SOLAR COLLECTOR WHICH IS BASED ON A HEAT RECEIVING PANEL MADE OF CORROSION RESISTANT MATERIALS AND WHICH IS USED FOR OPERATING IN NORTHEN TERRITORY CONDITIONS

COLLECTEUR SOLAIRE PLAT DESTINÉ À FONCTIONNER DANS DES RÉGIONS SEPTENTRIONALES RÉALISÉ SUR LA BASE D UN PANNEAU RÉCEPTEUR DE CHALEUR FAIT À PARTIR DE MATÉRIAUX RÉSISTANT À LA CORROSION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**03.08.2011 Patentblatt 2011/31**

(73) Patentinhaber: **Serbin, Anton Grigorjevich**
**82200 Hammaslahti (FI)**

(72) Erfinder: **Serbin, Anton Grigorjevich**
**82200 Hammaslahti (FI)**

(74) Vertreter: **Jeck, Anton**
**Klingengasse 2/1**
**71665 Vaihingen/Enz (DE)**

(56) Entgegenhaltungen:
| | |
|---|---|
| **AT-B- 403 844** | **DE-A- 2 735 070** |
| **DE-A1- 3 418 005** | **FR-A1- 2 275 739** |
| **RU-C1- 2 126 517** | **RU-C1- 2 126 517** |
| **RU-C1- 2 224 188** | **US-A- 5 241 824** |

• **TANAKA C. ET AL.: 'Zhilye doma s avtonomnym solnechnym teplokhlado-snabzheniem' STROIZDAT 1989, MOSCOW, Seiten 34 - 39, XP008148932**

**Beschreibung**

Die Erfindung betrifft die Wärmetechnik und kann in Einrichtungen zur Umwandlung von Sonnenenergie in thermische Energie eines Wärmeträgers verwendet werden. Die Erfindung kann eine Einsparung von Energie für das Aufwärmen von Wasser für den Haus- und Wirtschaftsbedarf mittels der Sonnenenergieverwendung gewährleisten.

Bekannt ist ein Solarkollektor, der einen Körper 1 und einen durchsichtigen Schutzüberzug 2 aus einem oder zwei geprägten Lochblechen aus Polypropylen enthält.

Dabei weisen die Bleche Vorsprünge auf, die so ausgerichtet sind, dass sie sich berühren. Ferner weist dieser Solarkollektor einen Absorber 3 der Sonnenenergie auf, der aus geprägten Blechen besteht, die Kanäle bilden und mit Kanälen für die Bewegung eines flüssigen Wärmeträgers 4 verbunden werden können. Auf die innere, untere Oberfläche der Kanäle des Absorbers ist eine lichtabsorbierende Schicht 5 aufgetragen. Die Kanäle des Absorbers haben eine Verbindung mit einer Quelle 6 und einem Verbraucher 7, durch den die Zufuhr und die Entnahme des Wärmeträgers 4 geschieht. Eine Wärmeisolierung 8 befindet sich zwischen dem Körper 1 und den Kanälen, und eine Seitenwärmeisolierung 9 befindet sich an den Seitenflächen des Körpers 1 (Patent der Russischen Föderation Nr. 2126517, C1. 6 F 24 J 2/24).

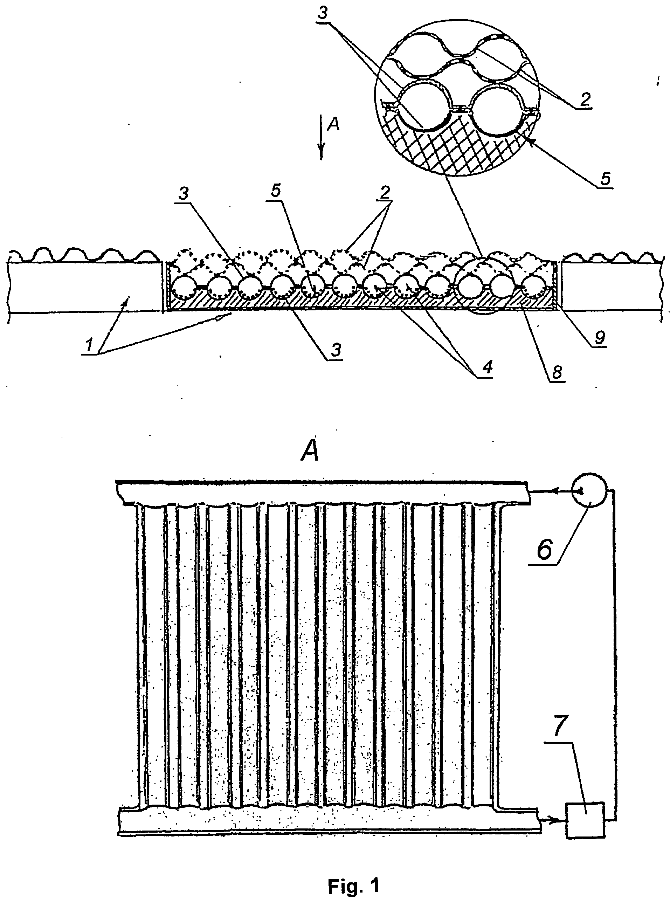

Das Schema dieses Solarkollektors ist auf der Figur 1 dargestellt. Der Solarkollektor arbeitet auf folgende Weise. Die Sonnenstrahlen dringen durch den Schutzüberzug 2 durch, insbesondere durch die geprägten Lochlbleche in die Zone der Anordnung der Kanäle des Absorbers 3 und wärmen den flüssigen, aus der Quelle 6 zufließenden Wärmeträger 4 auf, dessen Wärme vom Konsumenten 7 verwendet wird. Die Strahlen geraten je nach der Lage auf die geprägte Oberfläche der Bleche 2, gehen durch diese hindurch, erwärmen die Luftumgebung, die sich dazwischen befindet, und schaffen dadurch einen thermischen Bildschirm. Die Lochbleche 2 sind derart wärmegeladen, dass die Strahlenenergie unmittelbar in den Raum dringt, der von Rillen gebildet wird, und andererseits der Absorber 3 vor der Umwelteinwirkung geschützt wird. Weiterhin wärmt die Sonnen- und Thermoenergie einerseits unmittelbar den Wärmeträger 4 auf, dringt in die Kanäle des Absorbers 3 ein, die von zwei geprägten Lochlblechen aus Polypropylen gebildet sind, und wärmt andererseits die innere, untere Oberfläche der Kanäle des Absorbers 3 auf, die mit einer lichtabsorbierenden Schicht 5 beschichtet ist; dabei wird die Wärme von einem erwärmten Teil des Kanals dem Wärmeträger 4 übergeben. Die Rillen sind derart ausgebildet, dass bei einer beliebigen Lage der Sonne eine wirksame Absorption der thermischen Energie erfolgt.

Ein Mangel des bekannten Solarkollektors ist, dass in der vorliegenden Konstruktion beim Durchgang der Sonnenstrahlen durch die drei Schichten eines klaren Kunststoffs, einschließlich zwei Schichten, die den Schutzüberzug bilden, und durch eine Schicht des äußeren Elements des Absorbers bedeutende Verluste des Lichtstroms und eine Reflexion beobachtet werden; besonders bedeutend ist die Reflexion in der letzten Schicht des Luft-Kunststoff-Wärmeträgers, da es Umgebungen mit verschiedenen Dichten sind. Außerdem ist die Anwendung der geprägten Lochlbleche als durchsichtiger Schutzüberzug beim Betrieb unter den Bedingungen von großen Städten und von häufigen Niederschlägen unzulässig, da im Laufe von zwei Monaten die Verschmutzung der äußeren und inneren Oberflächen zwischen den Lochblechen so bedeutend sein kann, dass der Lichtstrom die Möglichkeit haben wird, nur durch die Perforation durchzugehen, da die durchsichtigen Oberflächen mit Staub und Schmutz abgedeckt sein werden (zum Beispiel müssen unter den Bedingungen der Stadt Moskau alle lichtdurchlässigen Konstruktionen einmal im Monat gereinigt werden). Im Falle der angebotenen Konstruktion ist die Staub- und Schmutzreinigung eines durchsichtigen Bildschirms nicht möglich; deshalb ist die Effektivität des gegebenen Kollektors bei seinem Dauerbetrieb sehr klein. Außerdem versagt der Kunststoffkollektor beim zulässigeren Arbeitsdruck der Flüssigkeit im System der Kanäle des Absorbers p = 1,5 atm. Außerdem lässt es dieser Kollektor nicht zu, den Wärmeträger bis zur Temperatur t = 100°C und mehr aufzuwärmen, wegen der recht niedrigen, physikalisch-mechanischen Eigenschaften der Kunststoffe bei diesen Temperaturen. Der bekannte Solarkollektor für die Erwärmung des Wärmeträgers arbeitet nur auf der thermischen Infrarotstrahlung der Sonne, und es bleiben andere Arten des Spektrums nicht verwendet; deshalb ist der bekannte Kollektor in der Morgen- und der Abendzeit sowie unter den Bedingungen der Nordterritorien nicht effektiv.

Das Dokument DE-A-3418005 zeigt einen Solarkollektor gemäß der Präambel des Anspruchs 1.

Die Aufgabe der Erfindung ist die Entwicklung der Konstruktion eines sicheren Solarkollektors, der den Wärmeträger bis zu hohen Temperaturen aufzuwärmen (höher als 100°C) vermag und die Möglichkeit des Betriebs des Solarkollektors mit der maximalen Effektivität der Sonnenenergienutzung unter den Bedingungen der Nordterritorien mit deren niedriger Beleuchtungsstärke und dem Vorhandensein hauptsächlich der kalten Arten des Strahlungsspektrums (zum Beispiel des ultravioletten Spektrums) zulässt.

Ein technisches Ergebnis der Erfindung ist die Versorgung der Betriebsmöglichkeit eines sicheren Solarkollektors, der zulässt, dass der Wärmeträger bis zu hohen Temperaturen (höher als 100° C) mit der maximalen Effektivität der Sonnenenergienutzung unter den Bedingungen der Nordterritorien mit deren niedriger Beleuchtungsstärke und dem Vorhandensein hauptsächlich der kalten Arten des Strahlungsspektrums (zum Beispiel des ultravioletten Spektrums) aufgewärmt wird.

Dieses technische Ergebnis wird durch die Merkmale des Anspruchs 1 erreicht.

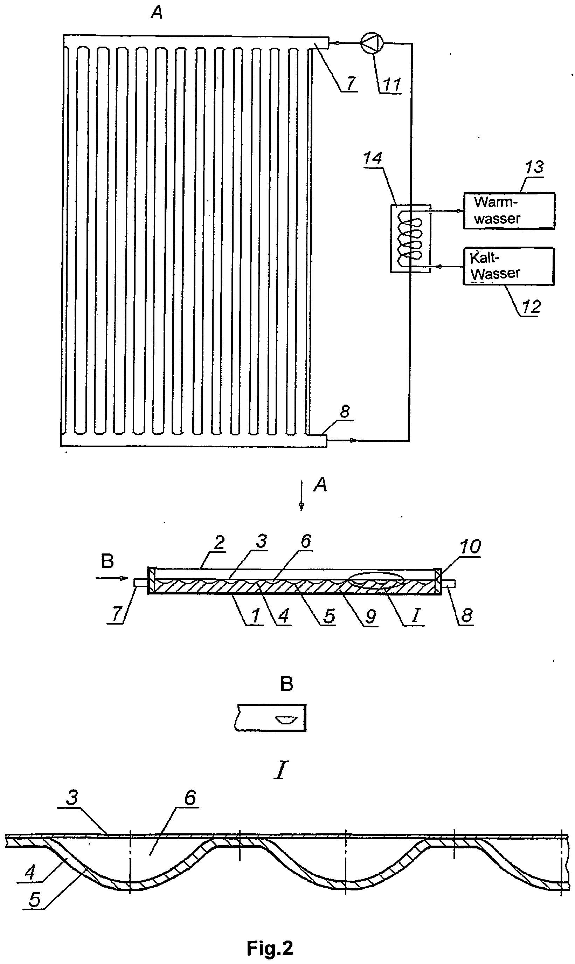

Das Schema des Solarkollektors ist in Fig. 2 dargestellt. Der Solarkollektor enthält einen dichten Körper 1 mit einem durchsichtigen Schutzüberzug 2, das Thermoempfangspaneel, das aus dem äußeren, flachen, durchsichtigen Element 3 und dem inneren Element 4 mit der entwickelten Oberfläche in der Art einer Rille, auf die die selektive Schicht 5 auf die Oberfläche aufgetragen ist, die den Wärmeträger 6 (Luminofor) kontaktiert, aus einem Verteilungskanal 7 und einem montierbaren Kanal 8 besteht, die beide eine Verbindung mit den Kanälen des Thermoempfangspaneels für die Zufuhr und die Entnahme des Wärmeträgers 6 haben; der Solarkollektor enthält ferner eine Wärmeisolierung 9, die sich zwischen dem Körper und dem Thermoempfangspaneel befindet, eine Seitenwärmeisolierung 10, die sich auf den Seiten des Körpers 1 befindet, und ein spezielles Ventil 11 für die Regelung der Zufuhr des Wärmeträgers in die Kanäle des Thermoempfangspaneels; die Zufuhr von kaltem Wasser aus der Quelle 12 und die Ableitung des aufgewärmten Wassers zum Konsumenten 13 erfolgen mit Hilfe eines Boilers 14.

Der Solarkollektor arbeitet folgendermaßen. Die Sonnenstrahlen gehen durch den durchsichtigen Schutzüberzug 2 des dichten Körpers 1, durch die Vakuumschicht oder die Gasumgebung, die sich zwischen dem Schutzüberzug und dem Thermoempfangspaneel 3, 4 befindet, die thermischen Verluste der äußeren Seite des Körpers 1 behindert und das Spektrum der Sonnenstrahlung ins Infrarotgebiet im Falle der Anwesenheit eines gasförmigen Luminofors verschiebt. Weiter dringt die Sonnenenergie durch das durchsichtige, äußere Element des Thermoempfangspaneels 3 und tritt zum Wärmeträger 6, dem Luminofor, ein, der aus dem Verteilungskanal 7 zugeführt wird und in den geschlossenen, längslaufenden Kanälen zirkuliert, die vom äußeren, flachen Element 3 und vom inneren Element 4 mit der entwickelten Oberfläche in der Art einer Rille des Thermoempfangspaneels gebildet sind. Mittels des Wärmeträgers 6, dem Luminofor, wird die fallende tatsächliche Strahlung mittels der Absetzung des Strahlenspektrums in die Infrarotstrahlung umgewandelt, die vom inneren Element 4 mit der entwickelten Oberfläche in der Art einer Rille mit der selektiven Schicht 5 absorbiert wird, wodurch die Erwärmung des inneren Elementes 4 mit der entwickelten Oberfläche in der Art einer Rille erfolgt. Weiterhin wärmt das innere Element mit der entwickelten Oberfläche in der Art einer Rille des Thermoempfangspaneels 4 mittels der Wärmeleitfähigkeit den Wärmeträger 6 auf; dabei wird eine bestimmte Temperatur der Erwärmung des Wärmeträgers mit der Regulierung seiner Zufuhr in den Verteilungskanal 7 mit dem speziellen Ventil 11 gewährleistet. Der Wärmeträger sammelt sich durch den montierbaren Kanal 8 und wird dem Boiler 14 zugeführt, in dem das Wasser aus der Quelle 12 vom Wärmeträger mittels der Wärmeleitfähigkeit aufgewärmt und dem Konsumenten 13 zugeführt wird. Die Wärmeisolierung 9, die sich zwischen dem Körper 1 und dem inneren Element des Thermoempfangspaneels 4 mit der entwickelten Oberfläche in der Art einer Rille befindet, und die Seitenwärmeisolierung 10 lassen maximal zu, thermische Verluste der inneren Seiten und der Breitseiten des Körpers 1 zu verringern.

Die angebotene Konstruktion des Solarkollektors gewährleistet das notwendige, technische Ergebnis, und zwar die Möglichkeit des Betriebs eines sicheren Solarkollektors, der den Wärmeträger bis zu hohen Temperaturen, höher als 100°C, aufzuwärmen zulässt, mit der maximalen Effektivität der Sonnenenergienutzung unter den Bedingungen der Nordterritorien mit deren niedriger Beleuchtungsstärke und dem Vorhandensein hauptsächlich von kalten Arten des Strahlungsspektrums (zum Beispiel des ultravioletten Spektrums) auf Kosten der Anwendung eines Thermoempfangspaneels mit einem durchsichtigen, äußeren Element und einem inneren, metallischen Element mit einer entwickelten Oberfläche in der Art einer Rille mit guter Absorptionsfähigkeit und Wärmeleitfähigkeit, in dessen Kanälen der Wärmeträger Luminofor zirkuliert, sowie auf Kosten davon, dass im Raum zwischen dem durchsichtigen Schutzüberzug und dem Thermoempfangspaneel ein Vakuum geschaffen oder dieser Raum mit Argon oder speziellen Gasen gefüllt ist, die Luminofore enthalten; dabei lassen das flüssige und gasförmige Luminofor zu, die fallende, tatsächliche Strahlung mittels der Absetzung des Strahlenspektrums in die Infrarotausstrahlung für die Aufwärmung des inneren Elementes mit der entwickelten Oberfläche in der Art einer Rille des Thermoempfangspaneels und der nachfolgenden Erwärmung des Wärmeträgers umzuwandeln.

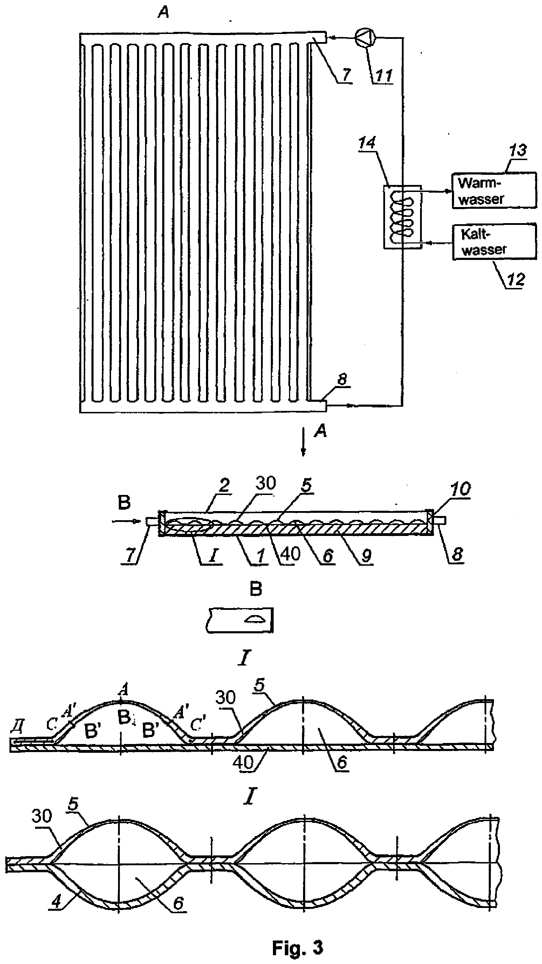

Eine andere Konstruktion des Solarkollektors gemäß der Erfindung ist in Fig. 3 gezeigt.

Das technische Ergebnis wird dadurch erreicht, dass der Solarkollektor, der einen dichten Körper mit einer Wärmeisolierung, einen durchsichtigen Schutzüberzug, Verteilungs- und montierbare Kanäle für die Zufuhr und die Entnahme eines flüssigen Wärmeträgers, mit der Thermoempfangseinrichtung versorgt ist, die in Form eines Paneels mit einer genügend großen Anzahl von längslaufenden Kanälen erfüllt ist, n = 30 - 100 auf 1 m$^2$ (n=Anzahl der Kanäle je Einheit der Fläche, St/m$^2$), das aus einem äußeren Element mit einer entwickelten Oberfläche in der Art einer Rille und einem inneren, flachen Element oder aus zwei Elementen mit einer entwickelten Oberfläche in der Art einer Rille besteht, die im Querschnitt ein periodisches Profil mit einer Reihenfolge von flachen Vorsprüngen haben, die für die Montage vorgesehen sind, wobei die Wanddicke d in den Zonen der Ebenen der Vorsprünge der Dicke des Ausgangsmaterials gleich $S_0$= 0,1-0,5 mm entspricht, $S_0$ - die Ausgangsdicke des Blechmaterials in mm und der Kanäle mit einer parabolischen Erzeugenden für einen verbesserten Thermoempfang ist, die mit dem folgenden Gesetz beschrieben

wird $y(x) = \dfrac{tg\beta}{B} x^2$ , wobei B y (x) die Funktion der Form des Kanalschnitts in mm, x-das Argument der Funktion der Form des Kanalschnitts in mm, β - der Formenwinkel in Grad und B - die Kanalbreite in mm ist; dabei ist beim äußeren Element mit der entwickelten Oberfläche in der Art einer Rille die Wanddicke in der zentralen Zone des Kanals minimal, und die Verteilung der Dicke nach dem Kanalschnitt ist $S(\beta) = S_0 \cos (1 + m) \beta$, wobei $S(\beta)$ die Funktion der Verteilung der Dicke nach dem Kanalschnitt in mm; $S_0$ die Ausgangsdicke des Blechmaterials in mm; m - der Koeffizient der Form und $\beta$ - der Formenwinkel ist.

Dadurch wird ermöglicht, folgende wärmetechnische Eigenschaften beim Material zu bekommen: in einer Richtung ist der Widerstand der Wärmeleitfähigkeit minimal, und in anderen Richtungen ist der Widerstand der Wärmeleitfähigkeit maximal. Die Kanalwand auf der Basis (C - C') verfügt über besondere, wärmetechnische Eigenschaften, da die Struktur des Materials im Laufe der Bearbeitung geändert ist; infolgedessen ist die Wärmeleitfähigkeit verbessert und die Wanddicke verringert, wodurch auch die Wärmeleitfähigkeit auf Kosten der Verkleinerung der kürzesten Entfernung für den Durchgang der Wärme verbessert hat. Dabei wird der minimale Widerstand der Wärmeleitfähigkeit in der Richtung (A - B) nach der kürzesten Entfernung beobachtet; in anderen Richtungen (C - D) ist der Widerstand der Wärmeleitfähigkeit wegen der großen Länge der Basis groß, deshalb fehlt tatsächlich der Wärmeaustausch zwischen der absorbierenden Oberfläche des Thermoempfangspaneels und seinen Peripheriezonen, wodurch allgemeine thermische Verluste des Kollektors verringert werden. Das Material, mit dem dieser Effekt realisiert sein kann, ist rostfreier Feinblechstahl, Stahl der ferritischen Klasse, Konstruktionstahl mit Rostschutzanstrich, Metallkunststoffe. Im Raum zwischen dem durchsichtigen Schutzüberzug und dem Thermoempfangspaneel ist ein Vakuum vorgesehen, oder dieser Raum ist mit Argon oder mit speziellen Gasen gefüllt, die Luminofore enthalten, die das Spektrum der fallenden Strahlung ins Infrarotgebiet zu verschieben zulassen. Die optimale Entfernung zwischen dem Schutzüberzug und dem Thermoempfangspaneel soll b = 35 - 60 mm mit Ausnahme der Konvektion und der damit verbundenen, thermischen Verluste der äußeren Seite des Körpers sein (wenn das Vakuum nicht verwendet wird), wobei b - ein wärmeisolierender Luftspielraum in mm ist. In Fig. 3 ist das Schema des Solarkollektors mit verschiedener Ausbildung des flachen, metallischen Paneels dargestellt: das Schema, bei dem das Paneel aus dem äußeren Element mit der entwickelten Oberfläche in der Art einer Rille mit einer variablen Wanddicke nach dem Kanalschnitt und dem inneren, flachen Element besteht; das Schema, bei dem das Paneel aus einem äußeren Element mit einer entwickelten Oberfläche in der Art einer Rille mit einer variablen Wanddicke nach dem Kanalschnitt und einem inneren Element mit einer entwickelten Oberfläche in der Art einer Rille mit der nach dem Schnitt stetigen Wanddicke besteht.

Der Solarkollektor enthält den dichten Körper 1 mit dem durchsichtigen, äußeren Überzug 2, das Thermoempfangspaneel, das aus dem äußeren Element 3 mit der entwickelten Oberfläche in der Art einer Rille mit der variablen Wanddicke und dem inneren, flachen Element 4 besteht, auf das die selektive Schicht 5 auf die Oberfläche aufgetragen ist; der Solarkollektor enthält ferner den Verteilungskanal 7, den montierbaren Kanal 8, die beide eine Verbindung mit den Kanälen des Thermoempfangspaneels für die Zufuhr und die Entnahme des Wärmeträgers 6 haben, die Wärmeisolierung 9, die sich zwischen dem Körper und dem Thermoempfangspaneel befindet, die Seitenwärmeisolierung 10, die sich an den Seiten des Körpers 1 befindet, und das spezielle Ventil 11 für die Regelung der Zufuhr des Wärmeträgers in die Kanäle des Thermoempfangspaneels, während die Zufuhr des kalten Wassers aus der Quelle 12 und die Ableitung des erwärmten Wassers zum Verbraucher 13 mit Hilfe des Boilers 14 erfolgt.

Der Sonnenkollektor arbeitet wie folgt: Die Sonnenstrahlen passieren eine transparente Schutzüberzug 2 des abgedichteten Gehäuses 1. Sodann passieren sie eine Vakuum-Schicht oder ein Gas-Medium, das sich zwischen der Schutzüberzug und der Wärmepanele 3-4 befindet. Diese verhindern einen Wärmeverlust von der Außenseite des Körpers 1. Dabei verlagert sich das Spektrum der Sonnenstrahlung in den Infrarotbereich, wenn ein Luminophor gasförmig vorhanden ist.

Weiter erwärmt die thermische Sonnenenergie das äußere Element mit der entwickelten Oberfläche in der Art einer Rille des Thermoempfangspaneels 3 mit der selektiven Schicht 5. Das äußere Element mit der entwickelten Oberfläche in der Art einer Rille 3 des Thermoempfangspaneels wärmt mittels der Wärmeleitfähigkeit den Wärmeträger 6 auf, der aus dem Verteilungskanal 7 zugeführt wird und in geschlossenen, längslaufenden Kanälen zirkuliert, die vom äußeren Element mit der entwickelten Oberfläche in der Art einer Rille und dem inneren, flachen Element des Thermoempfangspaneels 3, 4 gebildet sind; dabei wird eine bestimmte Temperatur der Erwärmung des Wärmeträgers mit der Regulierung seiner Zufuhr in den Verteilungskanal 7 mit dem speziellen Ventil 11 gewährleistet. Der Wärmeträger sammelt sich durch den montierbaren Kanal 7 und wird dem Boiler 14 zugeführt, in dem das Wasser aus der Quelle 12 vom Wärmeträger mittels der Wärmeleitfähigkeit aufgewärmt und dem Verbraucher 13 zugeführt wird. Die Wärmeisolierung 9, die sich zwischen dem Körper 1 und dem inneren Element des Thermoempfangspaneels 4 mit der entwickelten Oberfläche in der Art einer Rille befindet, und die Seitenwärmeisolierung 10 lassen maximal zu, thermische Verluste der inneren Seiten und der Breitseiten des Körpers 1 zu verringern.

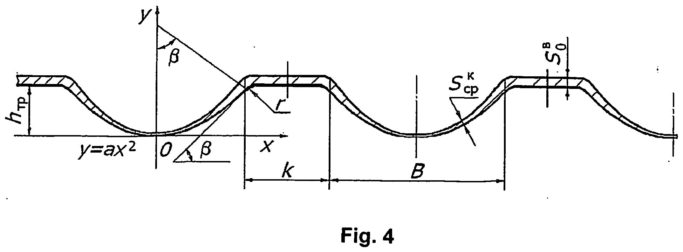

Das Schema des Elementprofils des Thermoempfangspaneels mit der entwickelten Oberfläche in der Art einer Rille mit der variablen Wanddicke nach dem Kanalschnitt ist in Fig. 4 dargestellt.

Die konstruktiven Verhältnisse des Profils des äußeren Elements mit der entwickelten Oberfläche in der Art einer Rille des Thermoempfangspaneels mit der variablen Wanddicke nach dem Kanalschnitt sind folgende:

Die relative Wanddicke des Profils auf der Ebene des Vorsprungs:

$$\frac{S_0^B}{k} = 0,030 - 0,083,$$ wobei $S_0^B = S_0 = 0,2 - 0,5$ mm ist, die Wanddicke in der Zone des flachen Vorsprungs der Dicke des Ausgangsblechmaterials in mm gleich ist und $\kappa$-die Breite des Vorsprungs in mm ist.

Die relative Wanddicke des Profils nach dem Kanalschnitt beträgt:

$$\frac{S_{cp}^{\kappa}}{B} = 0,011 - 0,037,$$ wobei $S_{cp}^{\kappa} = 0,77 - 0,82\, S_0$ - die mittlere Wanddicke nach der Kanalbreite in mm und B - die Kanalbreite in mm ist. $\frac{h_{TP}}{B} = 0,22 - 0,25$ ; $\frac{h_{TP}}{S_{cp}^{\kappa}} = 6,32 - 25$, die relative Kanaltiefe beträgt 6,32 - 25, wobei h - die geforderte Kanaltiefe in mm und B - die Kanalbreite in mm ist.

Die relative Höhe des Vorsprungs: $\frac{h_{TP}}{k} = 0,41 - 0,50$ wo $h_{rp}$ - die geforderte Kanaltiefe in mm und $\kappa$ - die Breite des Vorsprungs in mm misst; die Beziehung der Kanalbreite zur Breite des Vorsprungs beträgt:

$$\frac{k}{B} = 0,52 - 0,20,$$ wobei h die geforderte Kanaltiefe in mm und B - die Kanalbreite in mm ist.

Der Radius der Kopplung der Ebene des Vorsprungs mit der Kanalwand in mm beträgt: r= 2 - 5 $S_0$, r = 0,15 - 0,25 k, wobei $S_0$ - die Ausgangsdicke des Blechmaterials in mm und $\kappa$ - die Breite des Vorsprungs in mm ist.

Die Erzeugende des Kanals wird mit der parabolischen Abhängigkeit beschrieben:

$$y(x) = \frac{tg\beta}{B} x^2,$$ wobei 0<x<B/2 in mm, B - die Kanalbreite in mm und y(x) - die Funktion der Form des Kanalschnitts B in mm, sowie $\beta$ - der Formenwinkel in Grad ist.

Die Verteilung der Dicke nach dem Kanalschnitt vom Radius der Kopplung der Ebene des Vorsprungs bis zum Zentrum des Kanals wird mit der folgenden Abhängigkeit beschrieben:

S($\beta$) = $S_0$ cos (1 + m) $\beta$, wobei 0<m<1000, m - der Formkoeffizient, die Dicke in der zentralen Zone des Kanals minimal, S($\beta$) - die Funktion der Verteilung der Dicke nach dem Kanalschnitt in mm; $S_0$ - die Ausgangsdicke des Blechmaterials in mm und; $\beta$ - der Formenwinkel in Grad ist.

Im Unterschied zum äußeren Element mit der entwickelten Oberfläche in der Art einer Rille des Paneels ist die Wanddicke des inneren Elements mit der entwickelten Oberfläche in der Art einer Rille nach der Kanalbreite der Wanddicke in der Zone der Vorsprünge im Falle der Montage des Abwärmeaufnehmers aus zwei Elementen mit der entwickelten Oberfläche in der Art einer Rille gleich.

Die beschriebene Konstruktion des Solarkollektors gewährleistet das notwendige, technische Ergebnis, und zwar die sichere Betriebsmöglichkeit des Solarkollektors, der den Wärmeträger bis zu hohen Temperaturen, höher als 100° C, aufzuwärmen zulässt, mit der maximalen Effektivität der Sonnenenergienutzung unter den Bedingungen der Nordterritorien mit deren niedriger Beleuchtungsstärke und dem Vorhandensein hauptsächlich von kalten Arten des Strahlungsspektrums (zum Beispiel des ultravioletten Spektrums) auf Kosten der Nutzung des äußeren, metallischen Elements mit der entwickelten Oberfläche in der Art einer Rille mit der im Laufe der Bearbeitung geänderten Struktur des Materials, wobei infolgedessen die Wärmeleitfähigkeit verbessert ist, mit der variablen Wanddicke nach dem Kanalschnitt und der minimalen Wanddicke in der zentralen Zone des Kanals, wodurch auch die Wärmeleitfähigkeit mit der entwickelten Oberfläche in der Art einer Rille des Elementes auf Kosten der Verkleinerung der kürzesten Entfernung für den Durchgang der Wärme verbessert worden ist, sowie mit der optimalen, parabolischen Erzeugenden des Kanals für einen verbesserten Thermoempfang der fallenden Sonnenstrahlung, wobei im Raum zwischen dem durchsichtigen Schutzüberzug und dem Thermoempfangspaneel ein Vakuum geschaffen ist oder dieser Raum mit Argon oder speziellen Gasen gefüllt ist, die Luminofore enthalten, die das Spektrum der fallenden Strahlung ins Infrarotgebiet zu verschieben zulassen.

**Patentansprüche**

1. Solarkollektor für die Erwärmung eines flüssigen Wärmeträgers (6), der einen dichten Körper (1) mit einem durchsichtigen Schutzüberzug (2) und eine Thermoempfangseinrichtung für die Wärmeübertragung zum Wärmeträger (6) enthält, die in Form eines Paneels ausgebildet ist, das aus zwei miteinander verbundenen Elementen (3, 4; 4, 30; 30, 40) besteht, wobei zumindest das eine Element (4, 30), auf welches die thermische Solarstrahlung trifft, eine entwickelte Oberfläche in der Art einer Rille aufweist, wobei die beiden Elemente (3, 4; 4, 30; 30, 40) zusammen geschlossene Kanäle bilden, die eingangs- und ausgangsseitig mit Verteilungs- und montierbaren Kanälen (7, 8) verbunden sind, und wobei ferner auf die äußere Oberfläche des Elements 4, 30), auf welches die thermische Solarstrahlung trifft, eine selektive Schicht (5) aufgetragen ist,
   **dadurch gekennzeichnet,**
   **dass** im Raum zwischen dem durchsichtigen Schutzüberzug (2) und dem Thermoempfangspaneel ein Vakuum geschaffen oder dieser Raum mit Argon oder speziellen Gasen gefüllt ist, die Luminophore enthalten, die eine Verschiebung des Spektrums der fallenden Strahlung ins Infrarotgebiet zulassen,
   **dass** die optimale Entfernung zwischen dem durchsichtigen Schutzüberzug (2) und dem Thermoempfangspaneel b = 35-60 mm beträgt,
   **dass** das Thermoempfangspaneel mit einer genügend großen Anzahl längslaufender Kanäle, deren Anzahl $n$ = 30 - 100 auf 1m$^2$ ist, versehen ist dass das Material des Elements (4, 30), auf welches die thermische Solarstrahlung trifft, eine Dicke von $S_0$ = 0,1- 0,5 mm mit einer guten Absorptionsfähigkeit und Wärmeleitfähigkeit aufweist und vorzugsweise aus rostfreiem Stahl, Stahl der ferritischen Klasse, Konstruktionsstahl mit einem Rostschutzanstrich oder Metallkunststoffen besteht,
   **dass** dieses Element (4, 30) im Querschnitt ein periodisches Profil mit einer Reihenfolge von flachen Vorsprüngen aufweist, die für die Montage vorgesehen sind,
   **dass** die Kanäle im Querschnitt mit einer parabolischen Erzeugenden für einen verbesserten Thermoempfang gebildet sind, die mit der folgenden Abhängigkeit beschrieben wird:

$$y(x) = \frac{tg\beta}{B} x^2.$$

   **dass** in den gebildeten, geschlossenen Kanälen des Thermoempfangspaneels der Wärmeträger (6) zirkuliert, der Luminophor gebildet wird welches mittels der Absetzung des Spektrums der einfallenden Strahlung die gegebene Strahlung in die infrarote umzuwandeln zulässt, die von dem Element (4, 30) mit der entwickelten Oberfläche in der Art einer Rille, auf welches die thermische Solarstrahlung trifft, absorbiert wird, wodurch die Erwärmung des Elements erfolgt (4, 30), und
   **dass** dieses Element (4, 30) mittels der Wärmeleitfähigkeit den Wärmeträger aufwärmt, der Wärme an den Verbraucher übergibt,
   wobei: b - ein wärmeisolierender Luftspielraum in mm, n - die Anzahl der Kanäle je Einheit der Fläche in St/m$^2$, $S_0$ - die Ausgangsdicke des Blechmaterials in mm, y(x) - die Funktion der Form des Kanalschnitts in mm, B - die Kanalbreite in mm und $\beta$ - der Formenwinkel in Grad ist.

2. Solarkollektor nach Anspruch 1,
   **dadurch gekennzeichnet,**
   **dass** das Thermoempfangspaneel ein äußeres flaches Element (3) enthält, das aus einem durchsichtigen Material mit der Dicke $S_0$=0,1 - 4,0 mm, vorzugsweise aus einem speziellen, solartechnischen Glas oder aus einem gehärteten Glas mit einer guten Leitungsfähigkeit aller Spektrenarten einschließlich des UV-Spektrums usw., besteht,
   **dass** außer dem Glas die Anwendung von Kunststoffe vorgesehen ist, und dass das Thermoempfangspaneel ein inneres Element (4) enthält, das als das Element (4) mit der entwickelten Oberfläche in der Art einer Rille ausgestaltet ist.

3. Solarkollektor nach Anspruch 1,
   **dadurch gekennzeichnet,**
   **dass** das Thermoempfangspaneel ein äußeres Element (30) enthält, das mit der entwickelten Oberfläche in der Art einer Rille ausgestaltet ist, und dass ein inneres flaches Element (40) vorgesehen ist.

4. Solarkollektor nach Anspruch 1,
   **dadurch gekennzeichnet,**

**dass** das Thermoempfangspaneel ein äußeres Element (30) und ein inneres Element (4) enthält und dass beide Elemente (4, 30) mit der entwickelten Oberfläche in der Art einer Rille ausgestaltet sind.

5. Solarkollektor nach Anspruch 3 oder 4,
   **dadurch gekennzeichnet**,
   die Wanddicke des äußeren Elements (30) mit der entwickelten Oberfläche in der Art einer Rille, auf welches die thermische Solarstrahlung trifft, in der zentralen Zone des Kanals minimal und die Verteilung der Dicke nach dem Kanalschnitt $S(\beta) = S_0 \cos (1 + m) \beta$ ist, wobei $0<m<1000$, m - der Koeffizient der Form und die konstruktiven Verhältnisse für das Element mit der entwickelten Oberfläche in der Art einer Rille folgende sind:

$$\frac{S_0^B}{k} = 0,030 - 0,083 \; ; \; \frac{S_{cp}^\kappa}{B} = 0,011 - 0,037 \; ; \; \frac{h_{TP}}{B} = 0,22 - 0,25 \; ; \; \frac{h_{TP}}{S_{cp}^\kappa} = 6,32 - 25 \; ;$$

$$\frac{h_{TP}}{k} = 0,41 - 0,50 \; ; \; \frac{k}{B} = 0,52 - 0,20 \; ;$$

$$r = 2 - 5 \, S_0 \; ; \; r = 0,15 - 0,25 \, k \, ,$$

$$\text{wobei } S_0^B = S_0 = 0,2 - 0,5 \text{ mm } -$$

die Wanddicke ist in der Zone des flachen Vorsprungs der Dicke des Ausgangsblechmaterials in mm gleich, k - die Breite des Vorsprungs in mm, $S_{cp}^\kappa = 0,77 - 0,82$, $S_0$ - die mittlere Wanddicke nach der Kanalbreite in mm; B - die Kanalbreite in mm, $h_{TP}$ die geforderte Kanaltiefe in mm, und r - der Radius der Kopplung der Ebene des Vorsprungs mit der Kanalwand in mm ist.

## Claims

1. Solar collector for heating a liquid heat carrier (6) having a dense body (1) with a transparent protective coating (2) and a thermal receiver device for the heat transfer to the heat carrier (6), which is in the form of a panel consisting of two interconnected elements (3, 4; 4, 30; 30, 40), wherein at least the one element (4, 30) has a developed surface in the manner of a groove upon which the solar thermal radiation impinges,
   wherein the two elements (3, 4; 4, 30; 30, 40) together form closed channels, which are connected to input and output sides by distribution and mountable channels (7, 8), and wherein further, a selective layer (5) is applied to the outer surface of the elements (4, 30) upon which the solar thermal radiation impinges,
   **characterized in that**
   a vacuum is created in the space between the transparent protective coating (2) and the thermal receiver panel, or this space is filled with argon or special gases containing phosphors that allow a shift of the spectrum of the incident radiation in the infrared region,
   the optimal distance b between the transparent protective coating (2) and the thermal receiver panel is 35-60 mm,
   the thermal receiver panel is provided with a sufficiently large number of longitudinal channels, whose number n = 30-100 per $1m^2$,
   the material of the element (4, 30) upon which the solar thermal radiation impinges, has a thickness $S_0 = 0.1-0.5$ mm and has good absorption capacity and thermal conductivity, and is preferably made of stainless steel, steel of the ferritic class, construction steel with a rust preventive paint or metal plastics,
   this element (4, 30) has in cross-section a periodic profile with a succession of flat protrusions, which are provided for the mounting,
   the channels are formed in cross-section with a parabolic generatrix for improved thermal reception, which is described by the following:

$$y(x) = \frac{tg\beta}{B} x^2$$

the heat carrier (6), which is formed by phosphors, circulates in the formed closed channels of the thermal receiver panels, and converts the given radiation in the infrared by shifting the spectrum of the incident radiation, which is absorbed by the element (4, 30) with the developed surface in the manner of a groove, and upon which the solar thermal radiation impinges, wherein the heating of the element takes place (4, 30), and

this element (4, 30) heats the heat transfer carrier by means of thermal conductivity, which transfers heat to the consumer,

wherein: b is a thermally insulating air clearance in mm, n is the number of channels per unit of area in $St/m^2$, $S_0$ is the initial thickness of the sheet materials in mm, y(x) is the function of the shape of the channel section in mm, B is the channel width in mm, and ß is the form angle in degrees.

2. Solar collector according to claim 1,
   **characterized in that**
   the thermal receiver panel comprises an outer flat element (3), which is made of a transparent material having the thickness $S_0$ = 0.1 - 4.0 mm, preferably of a special solar technical glass or a tempered glass offering good conductivity of all spectra types of the UV spectrum, etc.,
   in addition to the glass, the use of plastics is provided, and the thermal receiver panel comprises an inner element (4), which is configured as the element (4) with the developed surface in the manner of a groove.

3. Solar collector according to claim 1,
   **characterized in that**
   the thermal receiver panel comprises an outer element (30), which is formed with the developed surface in the manner of a groove and that an inner flat element (40) is provided.

4. Solar collector according to claim 1,
   **characterized in that**
   the thermal receiver panel comprises an outer element (30) and an inner element (4) and that both elements (4, 30) are formed with the developed surface in the manner of a groove.

5. Solar collector according to claim 3 or 4,
   **characterized in that**
   the wall thickness of the outer element (30) with the developed surface in the manner of a groove, upon which the solar thermal radiation impinges, is minimal in the central zone of the channel, while the distribution of the thickness is in accordance with the channel section S(ß) = $S_0$ cos (1 is + m) ß, wherein 0<m<1000, m is the coefficient of the shape, and the constructive ratios for the element with the developed surface in the manner of a groove are as follows:

$$\frac{S_0^B}{k} = 0{,}030 - 0{,}083 \ ; \quad \frac{S_{cp}^x}{B} = 0{,}011 - 0{,}037 \ ; \quad \frac{h_{TP}}{B} = 0{,}22 - 0{,}25 \ ; \quad \frac{h_{TP}}{S_{cp}^x} = 6{,}32 - 25$$

$$\frac{h_{TP}}{k} = 0{,}41 - 0{,}50 \ ; \quad \frac{k}{B} = 0{,}52 - 0{,}20 \ ;$$

$$r = 2 - 5 \, S_0 \ ; \, r = 0{,}15 - 0{,}25 \, k \, ,$$

wherein $S_0^B = S_0 = 0{,}2 - 0{,}5 \, \text{mm}$ - is the wall thickness in the region of the flat projection that Is equal to the thickness of the starting sheet material in mm, k is the width of the projection in mm, $S_{cn}^x = 0{,}77 - 0{,}82$, $S_0$ is the average wall thickness of the channel width in mm; ß is the channel width in mm, $h_{TP}$ is the required channel depth in mm, and r is the radius of the coupling of the plane of the projection with the channel wall in mm.

**Revendications**

1. Collecteur solaire pour le chauffage d'un caloporteur liquide (6), qui contient un corps étanche (1) avec un revêtement de protection transparent (2) et un dispositif de réception thermique pour la transmission de la chaleur vers le caloporteur (6), qui est conçu sous la forme d'un panneau, constitué de deux éléments (3, 4 ; 4, 30 ; 30, 40) reliés entre eux, au moins un élément (4, 30), sur lequel arrive le rayonnement solaire, comprenant une surface développée sous la forme d'une rainure, les deux éléments (3, 4 ; 4, 30 ; 30, 40) formant ensemble des canaux fermés, qui sont reliés, côté entrée et côté sortie, avec des canaux de distribution et des canaux mon-tables (7, 8) et, en outre, sur la surface extérieure de l'élément (4, 30), sur laquelle le rayonnement solaire arrive, une couche sélective (5) étant appliquée,

**caractérisé en ce que**

dans l'espace entre le revêtement de protection transparent (2) et le panneau de réception thermique, un vide est créé ou bien cet espace est rempli d'argon ou de gaz spéciaux qui contiennent des luminophores, qui permettent un décalage du spectre du rayonnement incident vers le domaine infrarouge,

la distance optimale entre le revêtement de protection transparent (2) et le panneau de réception thermique est égale à $b$ = 35-60 mm,

le panneau de réception thermique est muni d'un nombre suffisant de canaux longitudinaux dont le nombre est égal à n = 30 - 10 sur 1m$^2$,

le matériau de l'élément (4, 30), sur lequel le rayonnement solaire arrive, présente une épaisseur $S_0$ = 0,1 - 0,5 mm avec une bonne capacité d'absorption et une bonne conductivité thermique et est constitué de préférence d'un acier inoxydable, d'un acier de la classe ferritique, d'un acier de construction avec une couche de protection anti-corrosion ou de matières plastiques métalliques,

cet élément (4, 30) présente une section avec un profil périodique avec une série de saillies plates qui sont prévues pour le montage,

les canaux présentent une section avec une génératrice parabolique pour une meilleure réception thermique, qui est décrite grâce à l'équation suivante :

$$y(x) = \frac{tg\beta}{B} x^2$$

.

dans les canaux fermés du panneau de réception thermique,

circule le caloporteur (6) qui est constitué d'un luminophore permettant la conversion du rayonnement incident en rayonnement infrarouge grâce au décalage du spectre du rayonnement incident, qui est absorbé par l'élément (4, 30) avec la surface développée sous la forme d'une rainure, sur laquelle le rayonnement solaire thermique arrive, ce qui permet le chauffage de l'élément (4, 30) et

cet élément (4, 30) chauffe, grâce à la conductivité thermique, le caloporteur qui transmet la chaleur au consommateur,

b étant un espace d'air à isolation thermique en mm, n étant le nombre de canaux par unité de surface en pc/mm$^2$, $S_0$ étant l'épaisseur de départ du matériau de type tôle en mm, y(x) étant la fonction de la forme de la coupe du canal en mm, B étant la largeur du canal en mm et $\beta$ étant l'angle de la forme en degrés.

2. Collecteur solaire selon la revendication 1,
   **caractérisé en ce que**
   le panneau de réception thermique contient un élément plat extérieur (3) qui est constitué d'un matériau transparent avec une épaisseur $S_0$ = 0,1 - 4,0 mm, de préférence d'un verre technique solaire spécial ou d'un verre durci avec une bonne capacité de conduction de tous les types de spectres, y compris le spectre UV etc.,
   hormis le verre, l'utilisation de matières plastiques est prévue,
   et le panneau de réception thermique contient un élément intérieur (4) qui est conçu comme l'élément (4) avec la surface développée sous la forme d'une rainure.

3. Collecteur solaire selon la revendication 1,
   **caractérisé en ce que**
   le panneau de réception thermique contient un élément extérieur (30) qui est conçu avec la surface développée sous la forme d'une rainure et **en ce qu'**un élément plat intérieur (40) est prévu.

4. Collecteur solaire selon la revendication 1,
   **caractérisé en ce que**
   le panneau de réception thermique contient un élément extérieur (30) et un élément intérieur (4) et **en ce que** les deux éléments (4, 30) sont conçus avec la forme développée sous la forme d'une rainure.

5. Collecteur solaire selon la revendication 3 ou 4,
   **caractérisé en ce que**

l'épaisseur de paroi de l'élément extérieur (30) avec la surface développée sous la forme d'une rainure, sur laquelle le rayonnement solaire arrive, est minimale dans la zone centrale du canal et la répartition de l'épaisseur selon la coupe du canal S(β) = So cos (1 + m) β, 0 < m < 1000, m étant le coefficient de la forme et les rapports de construction pour l'élément avec la surface développée sous la forme d'une rainure étant les suivants :

$$\frac{S_0^B}{k} = 0{,}030 - 0{,}083 \ ; \quad \frac{S_{cp}^\kappa}{B} = 0{,}011 - 0{,}037 \ ; \quad \frac{h_{TP}}{B} = 0{,}22 - 0{,}25 \ ; \quad \frac{h_{TP}}{S_{cp}^\kappa} = 6{,}32 - 25 \ ;$$

$$\frac{h_{TP}}{k} = 0{,}41 - 0{,}50 \ ; \quad \frac{k}{B} = 0{,}52 - 0{,}20 \ ;$$

$$r = 2 - 5 \ S_0 \ ; \ r = 0{,}15 - 0{,}25 \ k \ ,$$

moyennant quoi : $S_0^B = S_0 = 0{,}2 - 0{,}5 \ mm$ -

l'épaisseur de paroi est égale, dans la zone de la saillie plate, à l'épaisseur du matériau de type tôle de départ en mm, k étant la largeur de la saillie en mm, $S_{ep}^k$ = 0,77 - 0,82, So étant l'épaisseur de paroi moyenne selon la largeur de canal en mm ;
B étant la largeur du canal en mm, $h_{TP}$ étant la profondeur nécessaire du canal en mm et r étant le rayon du couplage du plan de la saillie avec la paroi du canal en mm.

**Fig. 1**

**Fig.2**

A

7  11

14  13  Warm-wasser

Kalt-wasser  12

8

A

B  2  30  5  10

7  I  1  40  6  9  8

B

I

Д  C  A'  A  A'  C'  30  5

B'  B  B'

40  6

I

30  5

4  6

**Fig. 3**

**Fig. 4**

**IN DER BESCHREIBUNG AUFGEFÜHRTE DOKUMENTE**

**In der Beschreibung aufgeführte Patentdokumente**

- RU 2126517
- DE 3418005 A